(19) Europäisches Patentamt European Patent Office Office européen des brevets

(11) **EP 4 428 488 B1**

(12) **EUROPEAN PATENT SPECIFICATION**

(45) Date of publication and mention
of the grant of the patent:
**14.05.2025 Bulletin 2025/20**

(21) Application number: **23805834.1**

(22) Date of filing: **05.05.2023**

(51) International Patent Classification (IPC):
$G06T\ 7/00$ (2017.01)    $G06T\ 7/62$ (2017.01)
$G01B\ 11/24$ (2006.01)    $G01B\ 11/26$ (2006.01)
$B60K\ 1/04$ (2019.01)    $B60L\ 50/60$ (2019.01)
$G01B\ 11/00$ (2006.01)    $G01B\ 11/06$ (2006.01)
$G01B\ 11/16$ (2006.01)    $H01R\ 43/16$ (2006.01)
$B60L\ 50/64$ (2019.01)    $G06V\ 10/44$ (2022.01)
$G06V\ 10/46$ (2022.01)

(52) Cooperative Patent Classification (CPC):
G06V 10/46; B60K 1/04; B60L 50/64; G01B 11/00;
G01B 11/06; G01B 11/16; G01B 11/24;
G01B 11/26; G06T 7/00; G06T 7/0004;
G06T 7/0006; G06T 7/62; G06V 10/44;
G06T 2207/30136

(86) International application number:
**PCT/CN2023/092346**

(87) International publication number:
**WO 2024/146037 (11.07.2024 Gazette 2024/28)**

(54) **QUALITY INSPECTION METHOD AND APPARATUS AND PRODUCTION METHOD AND DEVICE FOR CONNECTING PIECE, AND MEDIUM**

VERFAHREN UND VORRICHTUNG ZUR QUALITÄTSPRÜFUNG EINES ADAPTERTEILS, VERFAHREN ZUR HERSTELLUNG EINES ADAPTERTEILS, VORRICHTUNG ZUR HERSTELLUNG EINES ADAPTERTEILS UND MEDIUM

PROCÉDÉ ET APPAREIL D'INSPECTION DE QUALITÉ DE PIÈCE D'ADAPTATEUR, PROCÉDÉ ET DISPOSITIF DE PRODUCTION DE PIÈCE D'ADAPTATEUR, ET SUPPORT ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.01.2023 CN 202310008419**

(43) Date of publication of application:
**11.09.2024 Bulletin 2024/37**

(73) Proprietor: **Contemporary Amperex Technology (Hong Kong) Limited
Central, Central And Western District (HK)**

(72) Inventors:
• **HUANG, Zhongbao
Fujian 352100 (CN)**
• **WANG, Zhongyang
Fujian 352100 (CN)**

(74) Representative: **Gong, Jinping
CocreateIP
Neumarkterstr. 21
81673 München (DE)**

(56) References cited:
**CN-A- 112 304 243        CN-U- 209 310 752
DE-A1- 102014 214 201    DE-A1- 102014 214 201
DE-A1- 102015 012 795    JP-A- H09 170 915
US-A1- 2008 226 155**

**(Cont. next page)**

• ABDULLAH A B ET AL: "Roundness error evaluation of cold embossed hole based on profile measurement technique", THE INTERNATIONAL JOURNAL OF ADVANCED MANUFACTURING TECHNOLOGY, SPRINGER, LONDON, vol. 80, no. 1, 24 March 2015 (2015-03-24), pages 293 - 300, XP036251601, ISSN: 0268-3768, [retrieved on 20150324], DOI: 10.1007/S00170-015-6961-1

## Description

### CROSS-REFERENCE TO RELATED APPLICATIONS

This application refers to Chinese patent Application No. 202310008419.0, filed on January 4 and entitled "QUALITY INSPECTION METHOD AND APPARATUS AND PRODUCTION METHOD AND DEVICE FOR CONNECTING PIECE, AND MEDIUM".

### TECHNICAL FIELD

This application relates to the field of battery technologies, and in particular to, a connecting piece quality inspection method and quality inspection apparatus, a connecting piece production method, a connecting piece production device, an electronic device, and a computer readable storage medium.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

As an important component of a traction battery, a connecting piece plays a critical role in connecting a tab to a pole. In response to the market demand for traction batteries with high energy density, generally a connecting piece with a bulge that is formed by stamping is used, so as to improve space utilization of a battery. After formation, visual sampling inspection is performed manually on the stamping quality of the connecting piece. To meet the high energy density requirement of traction batteries, the connecting piece becomes thinner. In this case, stamping is more difficult to obtain a thinner material. As a result, quality problems, such as bulge displacement, uneven wall thickness of the bulge, and even bulge cracking, are more likely to be found. In some cases, regarding a method for visually inspecting the connecting piece, a risk of missing exists, quantitative inspection cannot be performed on local status of the bulge of the connecting piece, and the bulge quality of the connecting piece cannot be reliably inspected. When a non-conforming connecting piece is mounted on a traction battery, the temperature of the traction battery may rise excessively fast, affecting the quality of the traction battery and even causing safety accidents. Therefore, it is urgent to find a better connecting piece quality inspection solution.

DE 10 2014 214201 A1 describes a method of inspecting a workpiece formed from a metal sheet by pressing, wherein an image of the workpiece is captured after leaving the press and this image is processed to determine the outer contour of the workpiece. This contour is compared to the outer contour of the undeformed metal sheet prior to pressing and lead-in paths are determined. The numerical values characterizing these lead-in paths are compared to target values to detect deviations that are outside a range of tolerances.

A. B. Abdullah et al., "Roundness error evaluation of cold embossed hole based on profile measurement technique", Int. J. Adv. Manuf. Technol 80 (2015), 293, describes a method of evaluating the error of a cold embossed hole, wherein an image of the embossed workpiece is taken and a set of diametrically opposite points on the rim of the hole are determined. A minimum and a maximum distance of these points to the center of the hole are determined and the difference between these two distances is taken as a measure of the deviation of the hole from the target shape.

### SUMMARY

This application is intended to solve at least one of the technical problems in the related art. To this end, an object of this application is to propose a connecting piece quality inspection method and quality inspection apparatus, a connecting piece production method, a connecting piece production device, an electronic device, and a computer readable storage medium, so as to inspect the quality of connecting pieces.

A first aspect of this application provides a connecting piece quality inspection method, and the connecting piece includes a piece body and a bulge protruding from the piece body. The method includes: obtaining an inspection image of the connecting piece, where the inspection image covers the bulge; determining, in the inspection image, position information of a reference contour of the bulge and position information of an inspection contour of the bulge, where the reference contour is a contour of a mouth portion of the bulge coplanar with the piece body, and the inspection contour is a contour of a bottom portion of the bulge away from the piece body; and determining a quality inspection result of the connecting piece based on the position information of the reference contour and the position information of the inspection contour.

In the technical solution according to this aspect, the position information of the reference contour and the position information of the inspection contour of the bulge of the connecting piece are determined and used for quantitative analysis of the formation quality of the bulge of the connecting piece. Then, the quality inspection result of the connecting piece is determined, and quantitative inspection and analysis can be performed on the bulge displacement, formed during stamping, of the connecting piece. In this way, an accurate quality inspection result of the connecting piece can be obtained and connecting pieces that have not cracked but are at the risk of cracking are screened out. This prevents non-conforming connecting pieces from being mounted on traction batteries, reducing the risk of battery safety accidents.

In some embodiments, the determining a quality inspection result of the connecting piece based on the position information of the reference contour and the position information of the inspection contour includes: determining, based on the position information of the reference contour and the position information of the inspection contour, displacement information of a projection of the inspection contour in an axial direction of the bulge with respect to a projection of the reference contour in the axial direction of the bulge; and determining the quality inspection result of the connecting piece based on the displacement information. In the embodiments, the quality inspection result of the connecting piece is determined based on the displacement information, and quantitative inspection and analysis can be performed on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

In some embodiments, the displacement information includes a distance of displacement of a projection of the center of the reference contour in the axial direction of the bulge with respect to a projection of the center of the inspection contour in the axial direction of the bulge, and the determining the quality inspection result of the connecting piece based on the displacement information includes: determining, based on the distance of displacement, whether displacement of the bulge of the connecting piece is acceptable. In the embodiments, the distance of displacement of a position of the center of the reference contour with respect to a position of the center of the inspection contour on a plane where the piece body of the connecting piece is located is compared against a preset displacement value. In this way, quantitative inspection and analysis can be performed on the quality of the connecting piece, helping monitor the connecting piece production quality and improving efficiency of connecting piece quality inspection.

In some embodiments, the determining, based on the distance of displacement, whether displacement of the bulge of the connecting piece is acceptable includes: determining, in response to the distance of displacement being greater than a preset displacement value, that the displacement of the bulge of the connecting piece is unacceptable, where the preset displacement value is determined based on a material and/or size of the connecting piece. An appropriate preset displacement value is determined based on at least either of the material and the size of the connecting piece, so as to perform quality assessment on the bulge displacement of the connecting piece. In this way, the formation quality of the bulge can be accurately reflected, improving the inspection accuracy.

In some embodiments, the determining the quality inspection result of the connecting piece based on the displacement information further includes: calculating, based on the displacement information, an elongation of a side wall connecting the mouth portion and the bottom portion of the bulge; and determining, based on the elongation, whether quality of the side wall of the connecting piece is acceptable. In the embodiments, the elongation of the side wall of the bulge is calculated and whether quality of the side wall of the connecting piece is acceptable is determined based on the elongation. In this way, the quality inspection result of the connecting piece can be analyzed in multiple dimensions and connecting pieces that have not cracked but are at the risk of cracking are screened out. This prevents non-conforming connecting pieces from being mounted on traction batteries, reducing the risk of battery safety accidents.

In some embodiments, the calculating, based on the displacement information, an elongation of a side wall connecting the mouth portion and the bottom portion of the bulge includes: calculating a thickness of the side wall based on the displacement information; and calculating the elongation of the side wall based on the thickness of the side wall and a thickness of the piece body. In the embodiments, the thickness of the side wall is calculated based on the displacement information and the elongation of the side wall is calculated based on the thickness of the side wall and the thickness of the piece body. In this way, a degree of tensile deformation of the side wall material before and after formation of the bulge can be reflected by the elongation, further helping perform quantitative assessment on the cracking risk of the side wall and the quality of the connecting piece.

In some embodiments, the displacement information includes a distance of displacement of a projection of the center of the reference contour in the axial direction of the bulge with respect to a projection of the center of the inspection contour in the axial direction of the bulge, and the calculating a thickness of the side wall based on the displacement information includes: obtaining a first preset thickness of the side wall, a preset length of a projection of the side wall in the axial direction of the bulge, a second preset thickness of the piece body, and a preset distance between the bottom portion of the bulge and the piece body in the axial direction of the bulge; and calculating the thickness of the side wall based on the first preset thickness, the preset length, the second preset thickness, the preset distance, and the distance of displacement. In the embodiments, the elongation of the side wall is calculated based on the first preset thickness, the preset length, the second preset thickness, the preset distance, and the distance of displacement. In this way, the degree of tensile deformation of the side wall material before and after formation of the bulge can be properly reflected by the elongation, further helping perform quantitative assessment on the cracking risk of the side wall and the quality of the connecting piece.

In some embodiments, the determining, based on the elongation, whether quality of the side wall of the connecting piece is acceptable includes: determining, in response to the elongation being greater than a preset elongation, that quality of the side wall of the connecting piece is unacceptable, where the preset elongation is determined based on the material and/or the size of the connecting piece. An appropriate preset elongation is determined based on at least either of the material and the size of the connecting piece, so as to perform quality assessment on the side wall of the connecting piece. In this way, the formation quality of the side wall can be accurately reflected, improving the inspection accuracy.

In some embodiments, the mouth portion of the bulge includes a first reference feature, and the bottom portion of the bulge includes a second reference feature; and the determining, in the inspection image, position information of a reference contour of the bulge and position information of an inspection contour of the bulge includes: obtaining, from the inspection image, first reference position information of the first reference feature and second reference position information of the second reference feature; determining the position information of the inspection contour of the bulge based on the first reference position information of the first reference feature; and determining the position information of the reference contour of the bulge based on the second reference position information of the second reference feature. In the embodiments, the first reference feature and the second reference feature are provided at the mouth portion and the bottom portion respectively to assist in identifying the position information of the mouth portion and the bottom portion of the bulge. In this way, the position information of the mouth portion and the bottom portion in the inspection image of the connecting piece can be identified more easily and accurately. This reduces errors in image identification accuracy, helping accurately determine the positions of the reference contour and the inspection contour and thereby improving the accuracy of connecting piece quality inspection.

In some embodiments, the first reference feature includes at least one reference feature point, and the second reference feature includes at least one inspection feature point, where a position of the at least one inspection feature point is in one-to-one correspondence with a position of the at least one reference feature point. In the embodiments, the reference feature point and the inspection feature point are provided to assist in identifying the position information of the mouth portion and bottom portion of the bulge. In this way, the position information of the mouth portion and bottom portion in the inspection image of the connecting piece can be determined more easily and accurately, and then the accurate positions of the reference contour and the inspection contour are obtained, improving the accuracy of connecting piece quality inspection.

In some embodiments, the at least one reference feature point includes a plurality of first patterns arranged along a circumference of the reference contour, and the plurality of first patterns are used to indicate the reference contour of the bulge; and the at least one inspection feature point includes a plurality of second patterns arranged along a circumference of the inspection contour, and the plurality of second patterns are used to indicate the inspection contour of the bulge. In the embodiments, the first pattern is provided for indicating the reference contour of the bulge and the second pattern is provided for indicating the inspection contour of the bulge. This can facilitate the identification and precise positioning of the reference feature point and the inspection feature point. In addition, the distance of displacement of a projection of the center of the reference contour in the axial direction of the bulge with respect to a projection of the center of the inspection contour in the axial direction of the bulge can be easily calculated, so as to obtain the connecting piece quality inspection result.

In some embodiments, the at least one reference feature point and/or the at least one inspection feature point is provided on a surface of the bulge close to the piece body; and an obtaining direction of the inspection image is parallel to the axial direction of the bulge. In the embodiments, the reference feature point and/or the inspection feature point is provided on the surface of the bulge close to the piece body. This can assist in identifying the specific positions of the mouth portion and the bottom portion of the bulge, especially for a dark edge position of the bottom portion, so as to prevent obtaining of the inspection image of the connecting piece from being affected by light refraction of the peripheral rounded corners at the bottom portion of the bulge and improve the accuracy of positioning the center of the reference contour and the center of the detection contour. The inspection image is obtained along a direction parallel to the axial direction of the bulge. This facilitates subsequent identification of the mouth portion and the bottom portion of the bulge in the inspection image of the connecting piece and calculation of the distance of displacement, improving the inspection accuracy.

A second aspect of this application provides a quality inspection apparatus for a connecting piece including a piece body and a bulge protruding from a surface of the piece body. The apparatus includes: an image obtaining module, configured to obtain an inspection image of the connecting piece, where the inspection image covers the bulge; an image identification module, configured to determine, in the inspection image, position information of a reference contour of the bulge and position information of an inspection contour of the bulge, where the reference contour is a contour of a mouth portion of the bulge co-planar with the piece body of the connecting piece, and the inspection contour is a contour of a bottom portion of the bulge away from the piece body of the connecting piece; and an inspection result determining module, configured to determine a quality inspection result of the connecting piece based on the position information of the reference contour and the position information of the inspection contour.

In the technical solution according to this aspect, the inspection image of the connecting piece is obtained to determine the position information of the reference contour and the inspection contour of the bulge in the inspection image, and the quality inspection result of the connecting piece is determined based on the position information of the reference contour and the position information of the inspection contour. In this way, quantitative analysis of the formation quality of the bulge of the connecting piece can be performed. Then, the quality inspection result of the connecting piece is determined, and quantitative inspection and analysis can be performed on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

A third aspect of this application provides a connecting piece production method, including: stamping a piece body of a connecting piece to form a bulge, where the bulge comprises a mouth portion co-planar with the piece body, a bottom portion protruding from the piece body, and a side wall connecting the mouth portion and the bottom portion; and inspecting the stamped connecting piece by using the inspection method according to the foregoing embodiments to determine a quality inspection result of the connecting piece.

In the technical solution of this aspect, the stamped connecting piece is inspected by using the inspection method according to the foregoing embodiments. In this way, during production of the connecting piece, quantitative inspection and analysis can be performed on the bulge displacement, formed during stamping, of the connecting piece. Therefore, an accurate quality inspection result of the connecting piece can be obtained. This prevents non-conforming connecting pieces from being mounted on traction batteries, reducing the risk of battery safety accidents.

In some embodiments, the stamping a piece body of a connecting piece to form a bulge further includes: preparing at least one reference feature point and/or at least one inspection feature point on a surface of the connecting piece at the piece body side, where the at least one reference feature point is used to indicate a position of a reference contour of the mouth portion of the bulge, and the at least one inspection feature point is used to indicate a position of an inspection contour of the bottom portion of the bulge. In the embodiments, the reference feature point and/or the inspection feature point is formed by stamping, so that the positions of the reference contour and the inspection contour can be easily determined.

In some embodiments, the at least one inspection feature point is at least one first pattern formed by stamping, and the first pattern is a pattern of circle, oval, cross, teardrop, or polygon; and the at least one reference feature point is at least one second pattern formed by stamping, and the second pattern is a pattern of circle, oval, cross, teardrop, or polygon. In the embodiments, the first pattern and the second pattern are formed by stamping, simplifying the preparation process and avoiding increase of cost. Specific design of the first pattern and the second pattern is conducive to identification, so that the positions of the reference contour and the inspection contour can be easily determined.

In some embodiments, the connecting piece production method further includes: rejecting a non-conforming connecting piece in response to the quality inspection result being failed. In the embodiments, the non-conforming connecting piece is rejected in response to the quality inspection result being failed. In this way, non-conforming connecting pieces can be handled and separated from conforming connecting pieces, helping improve the efficiency of connecting piece production.

A fourth aspect of this application provides a connecting piece production device, adopting the connecting piece production method according to the foregoing embodiments.

A fifth aspect of this application provides an electronic device, including at least one processor and a memory communicatively connected with the at least one processor. The memory stores instructions capable of being executed by the at least one processor, and the instructions are executed by the at least one processor so that the at least one processor is capable of implementing the quality inspection method according to the foregoing embodiments or the production method according to the foregoing embodiments.

A sixth aspect of this application provides a computer readable storage medium storing a computer program. When the computer program is executed by a processor, the quality inspection method according to the foregoing embodiments or the production method according to the foregoing embodiments is implemented.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

BRIEF DESCRIPTION OF DRAWINGS

In the accompanying drawings, unless otherwise specified, the same reference signs refer to the same or similar parts or elements throughout the several drawings. The accompanying drawings are not necessarily drawn to scale. It should be understood that these accompanying drawings merely describe some embodiments disclosed in this application, and should not be construed as a limitation on the scope of this application. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic structural diagram of a vehicle according to some embodiments of this application;
FIG. 2 is an exploded schematic structural diagram of a battery according to some embodiments of this application;
FIG. 3 is a schematic structural diagram of a connecting piece according to some embodiments of this application;
FIG. 4 is a flowchart of a connecting piece quality inspection method according to some embodiments of this application;
FIG. 5 is a schematic cross-sectional diagram of a connecting piece in a design state according to some embodiments of this application;
FIG. 6 is a schematic cross-sectional diagram of displacement formed in stamping of a connecting piece according to some embodiments of this application;
FIG. 7 is a schematic diagram of a first reference feature and second reference feature of a connecting piece according to some embodiments of this application;
FIG. 8 is an inspection image of a connecting piece obtained in some embodiments of this application;
FIG. 9 is a block diagram of a structure of a connecting piece quality inspection apparatus according to some embodiments of this application; and
FIG. 10 is a flowchart of a connecting piece quality inspection method according to some embodiments of this application.

Reference signs:

vehicle 1000;
battery 100, controller 200, and motor 300;
box 10, first part 11, and second part 12;
battery cell 20;
connecting piece 21, and piece body 211;
bulge 212, mouth portion 2121, bottom portion 2122, and side wall 2123;
center A1 of a reference contour, and center A2 of an inspection contour;
reference feature points 2121a, 2121b, 2121c, and 2121d;
inspection feature points 2122a, 2122b, 2122c, and 2122d;
first preset thickness $T_1$;
second preset thickness $T_0$;
thickness of a side wall $T_2$;
preset length $D_1$;
preset distance $H_1$;
distance of displacement $\delta$;
first direction F1, and second direction F2;
connecting piece quality inspection apparatus 900; and
image obtaining module 910, image identification module 920, and inspection result determining module 930.

## DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of the description of the embodiments of this application rather than indicating or implying that the apparatuses or components mentioned must have specific orientations, or must be constructed or manipulated according to specific orientations, and therefore shall not be construed as any limitations on embodiments of this application.

In the descriptions of embodiments of this application, unless otherwise specified and defined explicitly, the technical terms "installment", "link", "connection", and "fix" should be understood in their general senses. For example, the terms may be a fixed connection, a detachable connection, or an integrated connection; or may be a mechanical connection or an electrical connection; or may be a direct connection, or an indirect connection through an intermediate medium; or may be an internal connection between two components or an interactive relationship between two components. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

The applicant has noted that in response to the market demand for traction batteries with high energy density, generally a connecting piece with a bulge that is formed by stamping is used, so as to improve space utilization of a battery. After formation, visual sampling inspection is performed manually on the stamping quality of the connecting piece. To meet the high energy density requirement of traction batteries, the connecting piece becomes thinner. In this case, stamping is more difficult to obtain a thinner material. As a result, quality problems, such as bulge displacement, uneven wall thickness of the bulge, and even bulge cracking, are more likely to be found. During quality inspection of a connecting piece, a high risk of missing inspection exists for visual inspection, quantitative inspection cannot be performed on local status of the bulge of the connecting piece, and the bulge quality of the connecting piece cannot be reliably inspected. When a non-conforming connecting piece is mounted on a traction battery, the temperature of the traction battery may rise excessively fast, affecting the quality of the traction battery and even causing safety accidents.

To improve the accuracy of connecting piece quality inspection, the applicant has found that positions of the center of a reference contour and the center of an inspection contour of the bulge of the connecting piece can be determined and used to determine the quality inspection result of the connecting piece, so that quantitative inspection and analysis can be performed on the bulge displacement, formed during stamping, of the connecting piece. Therefore, an accurate quality inspection result of the connecting piece can be obtained. This prevents non-conforming connecting pieces from being mounted on traction batteries, reducing the risk of battery safety accidents.

The connecting piece disclosed in some embodiments of this application may be part of a battery cell, and the battery cell may be used in an electric apparatus not limited to a vehicle, a ship, or an aircraft. Quality inspection and production of connecting pieces can be performed using the connecting piece quality inspection method and apparatus, the connecting piece production method and device disclosed in this application. This helps perform quantitative inspection and analysis on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

For ease of description, the electric apparatus of an embodiment of this application being a vehicle 1000 is used as an example for description of the following embodiments.

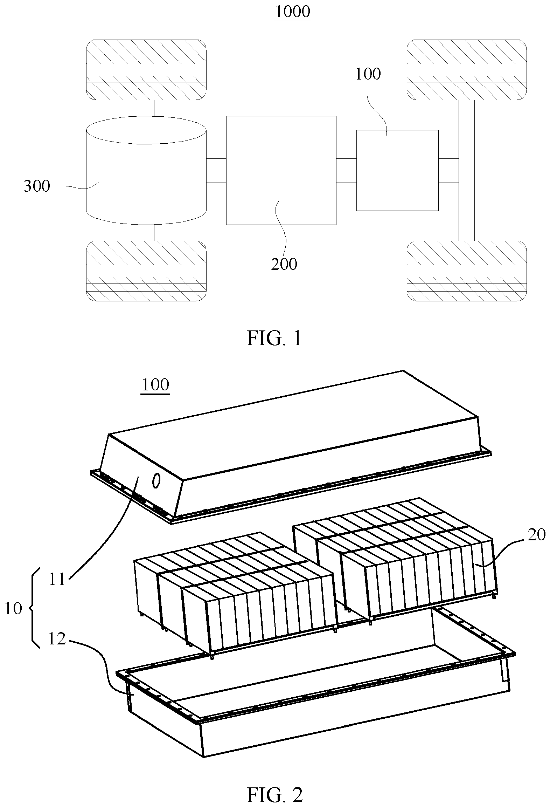

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery cell 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first part 11 and a second part 12. The first part 11 and the second part 12 fit together so that the first part 11 and the second part 12 jointly define a space for accommodating the battery cell 20. The second part 12 may be a hollow structure with one side open, and the first part 11 may be a plate structure. The first part 11 covers the open side of the second part 12, so that the first part 11 and the second part 12 jointly delimit an accommodating space. Alternatively, both the first part 11 and the second part 12 may be a hollow structure with one side open, and the open side of the first part 11 covers the open side of the second part 12. The box 10 formed by the first part 11 and the second part 12 may be in various shapes, such as a cylinder, a cuboid, or the like.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

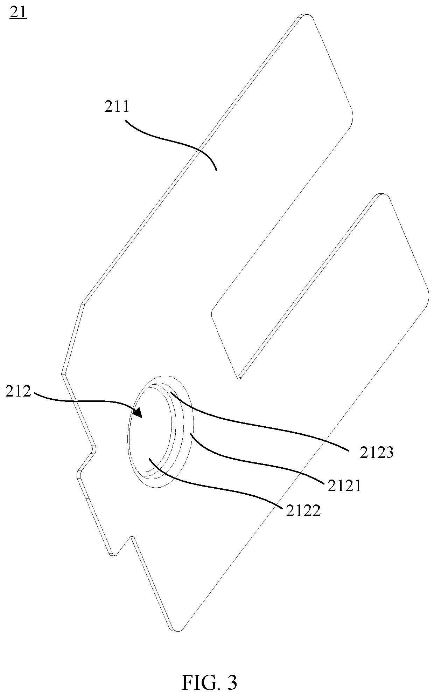

Referring to FIG. 3, FIG. 3 is a schematic structural diagram of a connecting piece 21 according to some embodiments of this application. The connecting piece 21 may be part of the battery cell 20 illustrated in FIG. 2.

In some embodiments, the connecting piece 21 may include a piece body 211 and a bulge 212 as shown in FIG. 3, where the bulge 212 includes a mouth portion 2121, a bottom portion 2122, and a side wall 2123 connecting the mouth portion 2121 and the bottom portion 2122. The mouth portion 2121 of the connecting piece 21 and the piece body 211 are co-planar, and the bottom portion 2122 of the connecting piece 21 is in a plane parallel to and away from the piece body 211.

A material of the connecting piece 21 may be copper or aluminum, or another conductive metal material.

The bulge 212 of the connecting piece 21 may be formed by stamping, so as to improve space utilization of a battery. After formation, visual sampling inspection is performed manually on the stamping quality of the connecting piece 21. A thickness of the side wall 2123 of the bulge 212 of the connecting piece 21 is negatively correlated with the energy density of the battery cell 20. Specifically, the energy density of the battery cell 20 increases as the side wall 2123 of the bulge 212 of the connecting piece 21 becomes thinner. It can be understood that the thinner the material, the more difficult the stamping. Therefore, in the pursuit of meeting the high energy density requirement of batteries, problems such as cracking of the connecting piece 21 tend to occur during the stamping and forming processes. In this case, higher quality inspection accuracy is required accordingly for the connecting piece.

The following describes in detail the connecting piece quality inspection method according to an embodiment of this application.

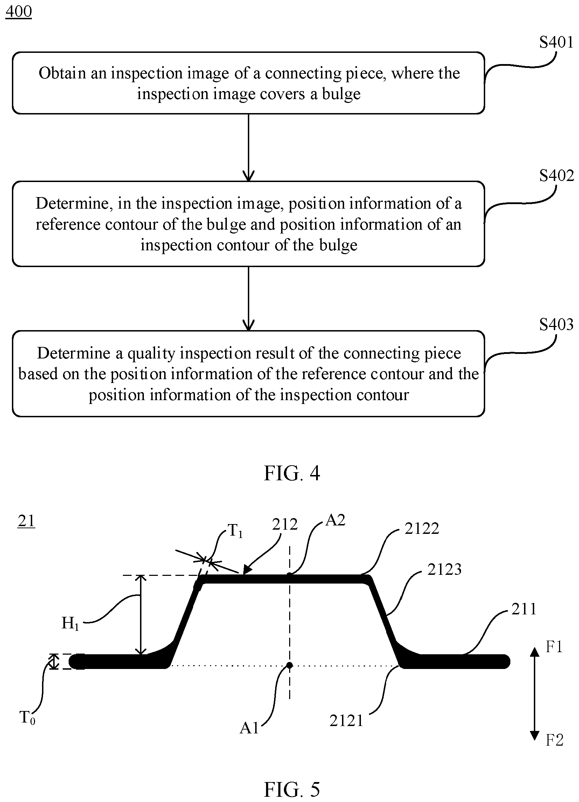

FIG. 4 is a flowchart of a connecting piece quality inspection method 400 according to some embodiments of this application. As shown in FIG. 4, the connecting piece quality inspection method includes steps S401 to S403.

Step S401. Obtain an inspection image of a connecting piece, where the inspection image covers a bulge.

The inspection image may be obtained by an image obtaining apparatus, and the inspection image can show complete image characteristics of the bulge of the connecting piece.

Step S402. Determine, in the inspection image, position information of a reference contour of the bulge and position information of an inspection contour of the bulge, where the reference contour is a contour of a mouth portion of the bulge co-planar with a piece body, and the inspection contour is a contour of a bottom portion of the bulge away from the piece body.

The reference contour of the mouth portion of the bulge and the inspection contour of the bottom portion of the bulge can be determined separately by identifying the image characteristics of the bulge in the inspection image. The position information of the reference contour and the position information of the inspection contour indicate position information of the contour of the mouth portion of the bulge and position information of the contour of the bottom portion of the bulge respectively, which may specifically be the position of the contour or a position parameter associated with the contour based on a specific shape of the contour, for example, position coordinates of the center of the contour.

Step S403. Determine a quality inspection result of the connecting piece based on the position information of the reference contour and the position information of the inspection contour.

After processing and formation of the bulge, displacement of the bottom portion of the bulge with respect to the mouth portion of the bulge can be quantitatively determined based on the position information of the reference contour and the position information of the inspection contour, and then the quality inspection result of the connecting piece is determined. The quality inspection result of the connecting piece is a determining result obtained based on the difference between the quality of connecting pieces to be inspected.

FIG. 5 is a diagram of a longitudinal section of the connecting piece 21 according to some embodiments of this application. The following further describes the connecting piece quality inspection method with reference to FIG. 5.

As shown in FIG. 5, the connecting piece 21 includes a piece body 211 and a bulge 212, where the bulge 212 includes a mouth portion 2121, a bottom portion 2122, and a side wall 2123 connecting the mouth portion 2121 and the bottom portion 2122. The mouth portion 2121 of the connecting piece 21 is in the same plane as the piece body 211, and the bottom portion 2122 of the connecting piece 21 protrudes along one side of the piece body 211 and is parallel to the plane where the piece body 211 is located. In other words, the bottom portion 2122 is parallel to a surface of the piece body 211. A reference contour of the bulge 212 refers to a contour of the mouth portion 2121, and an inspection contour of the bulge 212 refers to a contour of the bottom portion 2122.

In one example, the reference contour and the inspection contour may be in the shape of a circle, an oval, or a polygon.

In another example, as shown in FIG. 2, the reference contour of the mouth portion of the bulge 212 and the inspection contour of the bottom portion 2122 of the bulge 212 are both in the shape of a circle.

The position information of the reference contour refers to information indicating the position of the reference contour, including at least one of a contour position of the reference contour and the center position of the reference contour. The position information of the inspection contour refers to information indicating the position of the inspection contour, including at least one of a contour position of the inspection contour and the center position of the inspection contour.

It can be understood that the center A1 of the reference contour is the center position of the bulge determined during design of the connecting piece. The bottom portion 2122 protruding from the surface of the piece body 211 and the side wall 2123 connecting the bottom portion 2122 and the mouth portion 2121 are formed by using a stamping device to stamp at a position corresponding to the mouth portion, and the center A2 of the inspection contour is the center of the bottom portion 2122 formed by stamping. In one example, as shown in FIG. 5, the position information of the reference contour includes the position of the center A1 of the reference contour, and the position information of the inspection contour includes the position of the center A2 of the inspection contour. It can be understood that when both the reference contour and the inspection contour are in the shape of a circle, the center A1 of the reference contour and the center A2 of the inspection contour are centers of the circles respectively.

In the connecting piece quality inspection method according to some embodiments of this application, the position information of the reference contour and the position information of the inspection contour of the bulge of the connecting piece are determined and used for quantitative analysis of the formation quality of the bulge of the connecting piece. Then, the quality inspection result of the connecting piece is determined, and quantitative inspection and analysis can be performed on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

The following further describes various aspects of the connecting piece quality inspection method according to some embodiments of this application.

According to some embodiments of this application, step S403 may include: determining, based on the position information of the reference contour and the position information of the inspection contour, displacement information of a projection of the inspection contour in an axial direction of the bulge with respect to a projection of the reference contour in the axial direction of the bulge; and determining the quality inspection result of the connecting piece based on the displacement information.

The displacement information is information indicating displacement of the projection of the inspection contour in the axial direction of the bulge with respect to the projection of the reference contour in the axial direction of the bulge. The displacement between the inspection contour and the reference contour can be quantitatively determined based on the displacement information, and then the quality inspection result of the connecting piece can be determined.

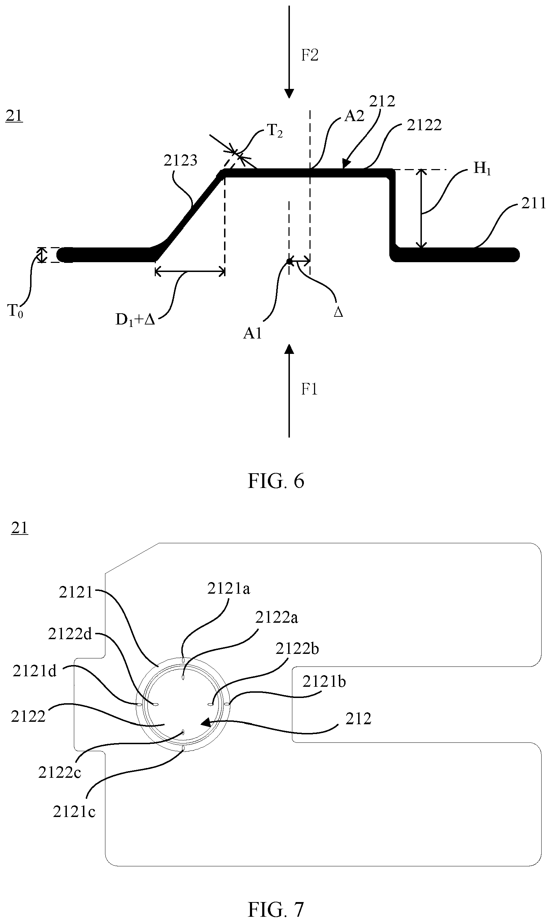

FIG. 6 is a schematic structural diagram in which the bulge 212 of the connecting piece 21 according to some embodiments of this application is displaced. The following provides a further description with reference to FIG. 5 and FIG. 6.

As shown in FIG. 5, the center A2 of the inspection contour corresponding to the bottom portion 2122 should theoretically coincide with the center A1 of the reference contour corresponding to the mouth portion 2121. That is, in the design state, the center A2 of the inspection contour coincides with the center A1 of the reference contour, and no displacement exists therebetween. In other words, FIG. 5 shows a shape of the connecting piece in the design state, without any displacement. However, during actual stamping, due to a positioning accuracy error or other reasons, the position of the center A2 of the inspection contour at the bottom portion formed by stamping may be displaced and misaligned with respect to the center A1 of the reference contour. As a quality defect present during production of the connecting piece, such displacement and misalignment will adversely affect the performance of the connecting piece and may even cause the connecting piece to break if exceeding a certain limit.

As shown in FIG. 6, the axial direction of the bulge is parallel to the first direction F1 and the second direction F2. The center A2 of the inspection contour corresponding to the bottom portion 2122 of the bulge 212 formed by stamping no longer coincides with the projection of the center A1 of the reference contour corresponding to the mouth portion 2121 in the axial direction of the bulge, but displacement is present. In this case, the quality of the connecting piece can be determined based on the displacement therebetween. In other words, displacement information of a projection of the inspection contour in an axial direction of the bulge with respect to a projection of the reference contour in the axial direction of the bulge is determined, and then the quality inspection result of the connecting piece can be determined.

During the process of determining the quality inspection result of the connecting piece according to some embodiments of this application, the quality inspection result of the connecting piece is determined based on the displacement information, and quantitative inspection and analysis can be performed on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

According to some embodiments of this application, the displacement information may include a distance of displacement of a projection of the center of the reference contour in the axial direction of the bulge with respect to a projection of the center of the inspection contour in the axial direction of the bulge, and the determining the quality inspection result of the connecting piece based on the displacement information may include: determining, based on the distance of displacement, whether displacement of the bulge of the connecting piece is acceptable.

In an example, as shown in FIG. 6, the distance of displacement $\Delta$ refers to a distance between a projection of the center A1 of the reference contour in the axial direction of the bulge 212 and a projection of the center A2 of the inspection contour in the axial direction of the bulge 212. A greater distance of displacement $\Delta$ indicates that the bottom portion 2122 of the bulge 212 formed by stamping is displaced farther from the design position. A great distance of displacement will lead to a large deviation of the position of the bulge from the design position. This hinders connection between the connecting piece and other parts in subsequent battery manufacturing, and may even have adverse impact on the battery quality.

During the process of determining the quality inspection result of the connecting piece according to some embodiments of this application, the distance of displacement of a position of the center of the reference contour with respect to a position of the center of the inspection contour on a plane where the piece body of the connecting piece is located is compared against a preset displacement value. In this way, quantitative inspection and analysis can be performed on the quality of the connecting piece, helping monitor the connecting piece production quality and improving efficiency of connecting piece quality inspection.

In some embodiments, the determining, based on the distance of displacement, whether displacement of the bulge of the connecting piece is acceptable includes: determining, in response to the distance of displacement being greater than a preset displacement value, that the displacement of the bulge of the connecting piece is unacceptable, where the preset displacement value is determined based on a material and/or size of the connecting piece.

In an example, during quality inspection of the connecting piece, the quality of the connecting piece can be determined by comparing the distance of displacement $\Delta$, of the projection of the center A1 of the reference contour in the axial direction of the bulge with respect to a projection of the center A2 of the inspection contour in the axial direction of the bulge, with the preset displacement value.

The preset displacement value may be determined based on at least one of the material and the size of the connecting piece. The size of the connecting piece include the thickness of the piece body, size of the bulge, and the like. When the distance of displacement is greater than the preset displacement value, it can be determined that the deviation of the stamping position of the bulge of the connecting piece is excessively large and does not meet the quality requirements, and the quality inspection result is failed. Only when the distance of displacement is less than or equal to the preset displacement value, an error in displacement of the bulge of the connecting piece is considered to be within an acceptable range, and the connecting piece has passed the quality inspection.

In some embodiments, the preset displacement value may be greater than 0 and less than or equal to 0.2 millimeters (mm). In some embodiments, the preset displacement value may be 0.1 mm.

An appropriate preset displacement value is determined based on at least either of the material and the size of the connecting piece, so as to perform quality assessment on the bulge displacement of the connecting piece. In this way, the formation quality of the bulge can be accurately reflected, improving the inspection accuracy.

In some embodiments of this application, the determining the quality inspection result of the connecting piece based on the displacement information may further include: calculating, based on the displacement information, an elongation of a side wall connecting the mouth portion and the bottom portion of the bulge; and determining, based on the elongation, whether quality of the side wall of the connecting piece is acceptable.

In an example, the elongation of the side wall refers to a degree of tensile deformation of the side wall portion under external force before and after formation of the bulge, and a greater elongation indicates greater tensile deformation of the side wall. As shown in FIG. 6, when the bulge 212 of the connecting piece 21 is displaced, the distance of displacement $\Delta$ of the projection of the center A1 of the reference contour in the axial direction of the bulge 212 with respect to the projection of the center A2 of the inspection contour in the axial direction of the bulge 212 gradually increases, and the tensile deformation of the side wall 2123 increases accordingly. The reason is that: during stamping and formation of the bulge 212, when the center A2 of the inspection contour of the bottom portion 2122 of the bulge 212 is displaced, uneven tensile deformation will occur on the side wall 2123 of bulge 212. As shown in FIG. 6, the side wall 2123 on a side opposite the displacement direction of the bottom portion 2122 of the bulge 212 is deformed greater than in the design state, indicating that the side wall 2123 will become thinner. As a result, the side wall 2123 will crack or is more likely to crack.

During the process of determining the quality inspection result of the connecting piece according to some embodiments of this application, the elongation of the side wall of the bulge is calculated and whether quality of the side wall of the connecting piece is acceptable is determined based on the elongation. In this way, the quality inspection result of the connecting piece can be analyzed in multiple dimensions. This prevents non-conforming connecting pieces from being mounted on traction batteries, reducing the risk of battery safety accidents.

According to some embodiments of this application, the calculating, based on the displacement information, an elongation of a side wall connecting the mouth portion and the bottom portion of the bulge includes: calculating a thickness of the side wall based on the displacement information; and calculating the elongation of the side wall based on the thickness of the side wall and a thickness of the piece body.

As shown in FIG. 5, when the bottom portion 2122 of the bulge 212 is not displaced, the side wall 2123 is stretched from a second preset thickness same as that of the piece body to a first preset thickness $T_1$ in the design state.

When the bottom portion 2122 of the bulge 212 is displaced, as shown in FIG. 6, a portion of the side wall 2123 of the bulge 212 opposite the displacement direction is further stretched, and the thickness $T_2$ of the side wall after being stretched is reduced compared with the first preset thickness $T_1$ of the side wall in the design state. The tensile deformation of the side wall of the bulge is from the second preset thickness $T_0$, which is the same as thickness of the piece body, to the thickness $T_2$. Therefore, the elongation of the side wall can be calculated based on a variation of the thickness $T_2$ of the side wall 2123 with respect to the second preset thickness $T_0$ of the piece body 211.

In an example, the elongation of the side wall $\delta_{\text{side wall}}$ can be calculated using the following equation:

$$\delta_{\text{side wall}} = \left(1 - \frac{T_2}{T_0}\right) \times 100\%;$$

where $T_2$ is the thickness of the side wall and $T_0$ is the second preset thickness of the piece body.

According to some embodiments of this application, the thickness of the side wall is calculated based on the displacement information and the elongation of the side wall is calculated based on the thickness of the side wall and the thickness of the piece body. In this way, a degree of tensile deformation of the side wall material before and after formation of the bulge can be reflected by the elongation, further helping perform quantitative assessment on the cracking risk of the side wall and the quality of the connecting piece.

According to some embodiments of this application, as shown in FIG. 6, the displacement information may include the distance of displacement $\Delta$ of the projection of the center A1 of the reference contour in the axial direction of the bulge 212 with respect to the projection of the center A2 of the inspection contour in the axial direction of the bulge 212, and the calculating a thickness $T_2$ of the side wall 2123 based on the displacement information may include: obtaining a first preset thickness $T_1$ of the side wall 2123, a preset length $D_1$ of a projection of the side wall 2123 in the axial direction of the bulge 212, a second preset thickness $T_0$ of the piece body 211, and a preset distance $H_1$ between the bottom portion 2122 of the bulge 212 and the piece body 211 in the axial direction of the bulge 212; and calculating the thickness $T_2$ of the side wall 2123 based on the first preset thickness $T_1$, the preset length $D_1$, the second preset thickness $T_0$, the preset distance $H_1$, and the distance of displacement $\Delta$.

In an example, the thickness $T_2$ of the side wall 2123 can be calculated based on the following equation:

$$T_2 = \frac{T_1 \sqrt{D_1^2 + H_1^2}}{\sqrt{(D_1 + \Delta)^2 + H_1^2}};$$

where, $T_1$ is the first preset thickness of the side wall 2123 in the design state, $D_1$ is the preset length of the projection of the side wall 2123 in the axial direction of the bulge 212 in the design state, $H_1$ is the preset distance between the bottom portion 2122 and the piece body 211 of the connecting piece 21, and $\Delta$ is the distance of displacement of the projection of the center A1 of the reference contour in the axial direction of the bulge 212 with respect to the projection of the center A2 of the inspection contour in the axial direction of the bulge 212.

In this embodiment, the elongation of the side wall is calculated based on the first preset thickness, the preset length, the second preset thickness, the preset distance, and the distance of displacement. In this way, the degree of tensile deformation of the side wall material before and after formation of the bulge can be properly reflected by the elongation, further helping perform quantitative assessment on the cracking risk of the side wall and the quality of the connecting piece.

In some embodiments, the determining, based on the elongation, whether quality of the side wall of the connecting piece is acceptable includes: determining, in response to the elongation being greater than a preset elongation, that quality of the side wall of the connecting piece is unacceptable, where the preset elongation is determined based on the material and/or the size of the connecting piece.

In an example, the elongation of the side wall refers to a change rate of the thickness of the side wall after tensile deformation with respect to the thickness before stamping. The elongation of the side wall of the bulge is used to determine whether the quality of the side wall of the connecting piece is acceptable, and whether the quality of the side wall is acceptable can be determined by comparing the calculated elongation of the side wall with the preset elongation. In this way, the cracking risk of the side wall and the quality of the connecting piece can be assessed more accurately.

The preset elongation is determined based on at least one of the material and the size of the connecting piece. The material of the connecting piece may alternatively be other conductive metals. Different materials have different ductility characteristics, and therefore different preset elongations can be set for different materials for the connecting piece. The size of the connecting piece include the thickness of the piece body, size of the bulge, and the like. The size of the connecting piece also affect the quality of the side wall after tensile deformation, and different preset elongations can be set for more accurately assessing the quality of the side wall. In some examples, when the connecting piece is made of aluminum, the preset elongation may be set to 22%. In some other examples, when the connecting piece is made of copper, the preset elongation may be set to 40%.

An appropriate preset elongation is determined based on at least either of the material and the size of the connecting piece, so as to perform quality assessment on the side wall of the connecting piece. In this way, the formation quality of the side wall can be accurately reflected, improving the inspection accuracy.

FIG. 7 is a schematic diagram of a first reference feature and second reference feature of a connecting piece 21 according to some embodiments of this application.

In some embodiments of this application, the mouth portion 2121 of the bulge 212 may include a first reference feature, and the bottom portion 2122 of the bulge 212 may include a second reference feature; and the determining, in the inspection image, position information of a reference contour of the bulge 212 and position information of an inspection contour of the bulge 212 in step S402 may include: obtaining, from the inspection image, first reference position information of the first reference feature and second reference position information of the second reference feature; determining the position information of the reference contour of the bulge 212 based on the first reference position information of the first reference feature; and determining the position information of the reference contour of the bulge 212 based on the second reference position information of the second reference feature.

The first reference feature is a feature set at the mouth portion of the bulge and used to indicate the position of the reference contour, and the second reference feature is a feature set at the bottom portion of the bulge and used to indicate the position of the inspection contour. In some examples, the first reference feature and the second reference feature are patterns in the inspection image that are easy to be displayed and identified. The first reference position information is the position information of the first reference feature in the inspection image, and the second reference position information is the position information of the second reference feature in the inspection image. The first reference position information and the second reference position information can be used to help determine the position information of the reference contour and the position information of the inspection contour.

In an example, as shown in FIG. 7, the first reference feature may include reference feature points 2121a, 2121b, 2121c, and 2121d to indicate the position of the mouth portion 2121 of the bulge 212, so that the position of the center of the reference contour of the mouth portion 2121 in the image of the connecting piece can be more easily and accurately identified during subsequent image identification. A recess will be formed after the mouth portion 2121 of the bulge 212 is stamped, so the center position of the contour cannot be identified directly. The reference feature points 2121a, 2121b, 2121c, and 2121d may be provided along the edge of the mouth portion 2121 so that the position of the center of the reference contour is determined by identifying positions along the edge of the contour of the mouth portion 2121. Alternatively, the reference feature points may be provided equidistant from the center of the reference contour, so as to indicate the position of the center of the reference contour. Specifically, the reference feature points 2121a, 2121b, 2121c, and 2121d may be provided on a side of the edge of the mouth portion 2121 close to the side wall, or may be provided on a surface of the piece body close to the mouth portion.

It can be understood that the reference features located at positions close to both sides of the edge of the mouth portion 2121 and used to identify the position information of the reference contour should all be considered the first reference features of the mouth portion 2121 of the bulge 212 mentioned in this embodiment.

In an example, as shown in FIG. 7, the second reference feature may include inspection feature points 2122a, 2122b, 2122c, and 2122d to indicate the position of the bottom portion 2122 of the bulge 212, so that the position of the center of the inspection contour of the bottom portion 2122 in the image of the connecting piece can be more easily and accurately identified during subsequent image identification. The inspection feature points 2122a, 2122b, 2122c, and 2122d may be provided along the edge of the bottom portion 2122 so that the position of the center of the inspection contour is determined by identifying positions along the edge of the contour of the bottom portion 2122. Alternatively, the inspection feature points may be provided equidistant from the center of the inspection contour, so as to indicate the position of the center of the inspection contour.

It can be understood that the reference features located at positions close to both sides of the edge of the bottom portion 2122 and used to identify the position information of the inspection contour should all be considered the second reference features of the bottom portion 2122 of the bulge 212 mentioned in this embodiment.

In the embodiments, the first reference feature and the second reference feature are provided at the mouth portion and the bottom portion respectively to assist in identifying the position information of the mouth portion and the bottom portion of the bulge. In this way, the position information of the mouth portion and the bottom portion in the image of the connecting piece can be identified more easily and accurately. This reduces errors in image identification accuracy, helping accurately determine the positions of the reference contour and the inspection contour and thereby improving the accuracy of connecting piece quality inspection.

According to some embodiments of this application, the first reference feature includes at least one reference feature point, and the second reference feature includes at least one inspection feature point, where a position of the at least one inspection feature point is in one-to-one correspondence with a position of the at least one reference feature point.

Still referring to FIG. 7, FIG. 7 shows four reference feature points 2121a, 2121b, 2121c, and 2121d of the mouth portion 2121 of the bulge 212. The four reference feature points 2121a, 2121b, 2121c, and 2121d are spaced apart along the edge of the mouth portion 2121 of the bulge 212 to identify the contour position of the mouth portion 2121. When the positions of the four reference feature points 2122a, 2122b, 2122c, and 2122d are identified from the inspection image, the specific position of the contour of the mouth portion 2121 can be obtained by means of fitting, and then position information of the reference contour of the mouth portion 2121 is determined, for example, the position of the center of the reference contour. It should be noted that the number of reference feature points is not limited to four as illustrated in FIG. 7. As long as the position of the contour of the mouth portion 2121 and/or the position of the center of the contour can be identified, the number is acceptable.

In an example, as shown in FIG. 7, the four reference feature points 2121a, 2121b, 2121c, and 2121d may be equally spaced around the center of the reference contour. In this way, two opposite reference feature points can be connected, that is, the reference feature points 2121a and 2121c are connected and the reference feature points 2121b and 2121d are connected. Then, the position of the intersection of the two line segments is determined as the position of the center of the reference contour. Alternatively, the position of the center of the reference contour can be calculated by identifying coordinates of the positions of the reference feature points 2121a, 2121b, 2121c, and 2121d in the image of the connecting piece.

FIG. 7 also shows four inspection feature points 2122a, 2122b, 2122c, and 2122d provided on a surface at the bottom portion 2122 side of the bulge 212, and the four inspection feature points 2122a, 2122b, 2122c, and 2122d are spaced apart along the edge of the bottom portion 2122 to identify the position of the contour of the bottom portion 2122. When the positions of the four inspection feature points 2122a, 2122b, 2122c, and 2122d are identified from the inspection image, an edge curve of the contour of the bottom portion 2122 can be obtained by means of fitting, and then position information of the inspection contour of the bottom portion 2122 is determined, for example, the position of the center of the inspection contour. It should be noted that the number of inspection feature points is not limited to four as illustrated in FIG. 7. As long as the position of the contour of the bottom portion 2122 and/or the position of the center of the contour can be identified, the number is acceptable. In this way, two opposite inspection feature points can be connected, that is, the inspection feature points 2122a and 2122c are connected and the inspection feature points 2122b and 2122d are connected. Then, the position of the intersection of the two line segments is determined as the position of the center of the inspection contour. Alternatively, the position of the center of the inspection contour can be calculated by identifying coordinates of the positions of the inspection feature points 2122a, 2122b, 2122c, and 2122d.

In an example, as shown in FIG. 7, the four inspection feature points 2122a, 2122b, 2122c, and 2122d may be in one-to-one correspondence with the four reference feature points 2121a, 2121b, 2121c, and 2121d. In this way, the positions of the mouth portion of the bulge and the bottom portion of the bulge, as well as the displacement, can be determined more intuitively by means of position comparison.

It can be understood that the inspection feature points may not be in one-to-one correspondence with the reference feature points, as long as the inspection contour and the reference contour can be indicated.

In the connecting piece quality inspection method according to some embodiments of this application, the reference feature point and the inspection feature point are provided to assist in identifying the position information of the mouth portion and bottom portion of the bulge. In this way, the position information of the mouth portion and bottom portion in the inspection image of the connecting piece can be determined more easily and accurately, and then the accurate positions of the reference contour and the inspection contour are obtained, improving the accuracy of connecting piece quality inspection.

According to some embodiments of this application, the at least one reference feature point includes a plurality of first patterns arranged along a circumference of the reference contour, and the plurality of first patterns are used to indicate the reference contour of the bulge; and the at least one inspection feature point includes a plurality of second patterns arranged along a circumference of the inspection contour, and the plurality of second patterns are used to indicate the inspection contour of the bulge.

In an example, the first pattern and the second pattern may be any of patterns such as circles, ovals, teardrops, polygons, or solid dots, and the first pattern and the second pattern may be the same or different. For example, as shown in FIG. 7, both the first pattern and the second pattern are oval patterns.

It should be understood that FIG. 7 illustrates one form of providing the reference feature points and the inspection feature points, and other forms of provision satisfying invention objectives of this application should also fall within the scope of protection of this application.

In the connecting piece quality inspection method according to some embodiments of this application, the first pattern is provided for indicating the reference contour of the bulge and the second pattern is provided for indicating the inspection contour of the bulge. This can facilitate the identification and precise positioning of the reference feature point and the inspection feature point. In addition, the distance of displacement of a projection of the center of the reference contour in the axial direction of the bulge with respect to a projection of the center of the inspection contour in the axial direction of the bulge can be easily calculated, so as to obtain the connecting piece quality inspection result.

According to some embodiments of this application, the at least one reference feature point and/or the at least one inspection feature point is provided on a surface of the bulge close to the piece body; and an obtaining direction of the inspection image is parallel to the axial direction of the bulge.

In an example, the image of the connecting piece can be obtained by an image obtaining device, and then the quality of the connecting piece is assessed by means of image identification. The image obtaining device may be a CCD camera or other visual inspection apparatuses.

In some embodiments, as shown in FIG. 5 and FIG. 6, the image obtaining device may obtain the image of the connecting piece along a direction parallel to the axial direction of the bulge 212, and the obtaining direction may be a first direction F1 perpendicular to the piece body 211 of the connecting piece 21 and same as a protruding direction of the bulge 212, or a second direction F2 perpendicular to the piece body 211 of the connecting piece 21 and opposite the protruding direction of the bulge 212. The bulge is also stamped in a direction perpendicular to the plane in which the piece body is located. Therefore, the inspection image of the connecting piece obtained along the obtaining direction perpendicular to the plane in which the piece body is located can better show the positions of the mouth portion and bottom portion of the bulge.

In an example, as shown in FIG. 5, the image obtaining device may obtain the image of the connecting piece along the first direction F1. In this case, at least one reference feature point and/or at least one inspection feature point is provided on the surface of the bulge 212 close to the piece body 211, namely, on the surface of the bulge 212 where a recess is formed, for example, a lower surface of the connecting piece 21 shown in FIG. 5. The recess at the bulge affects the light reflection during image obtaining, especially at the corner between the bottom portion of the bulge and the side wall where a chamfered or beveled shape is present. In this case, it is difficult to clearly determine the contour position of the bulge in the obtained inspection image of the connecting piece. As a result, the accuracy of the connecting piece quality inspection is affected.

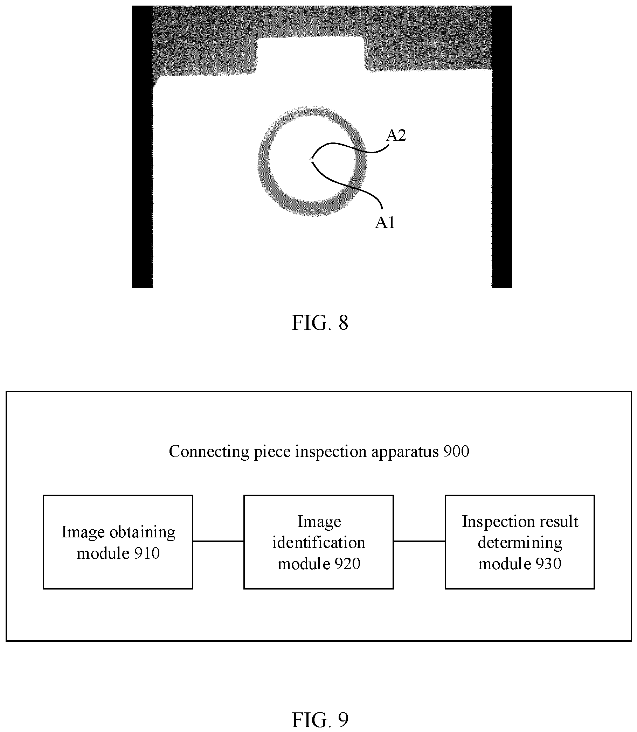

FIG. 8 is an inspection image of a connecting piece obtained in some embodiments of this application.

As shown in FIG. 8, the mouth portion of the bulge and the bottom portion of the bulge can be observed in the inspection image of the connecting piece because the mouth portion and the bottom portion of the bulge present different pattern characteristics. Therefore, the positions of the mouth portion and the bottom portion of the bulge can be identified by identifying such characteristics, and then the position information of the reference contour and the position information of the inspection contour determined using the method in some embodiments of this application are used to assess the quality of the connecting piece.

It should be understood that FIG. 8 shows an inspection image of a connecting piece obtained during quality inspection of a reference connecting piece. In actual application, during quality inspection of a different connecting piece, a reference image for the obtained connecting piece image may be in a shape different from that in FIG. 8, and the position of the center A1 of the reference contour and the position of the center A2 of the inspection contour may also be different.

In the connecting piece quality inspection method according to some embodiments of this application, the reference feature point and the inspection feature point are provided on a surface of the connecting piece facing the obtaining direction. This can assist in identifying the specific positions of the mouth portion and the bottom portion of the bulge, especially for a dark edge position of the bottom portion, so as to prevent obtaining of the inspection image of the connecting piece from being affected by light refraction of the peripheral rounded corners at the bottom portion of the bulge and improve the accuracy of positioning the center of the reference contour and the center of the detection contour.

FIG. 9 is a structural diagram of a connecting piece quality inspection apparatus 900 according to some embodiments of this application.

According to a second aspect of this application, a connecting piece quality inspection apparatus 900, where the connecting piece includes a piece body and a bulge protruding from a surface of the piece body, is provided. The apparatus includes: an image obtaining module 910, configured to obtain an inspection image of the connecting piece, where the inspection image covers the bulge; an image identification module 920, configured to determine, in the inspection image, position information of a reference contour of the bulge and position information of an inspection contour of the bulge, where the reference contour is a contour of a mouth portion of the bulge co-planar with the piece body of the connecting piece, and the inspection contour is a contour of a bottom portion of the bulge away from the piece body of the connecting piece; and an inspection result determining module 930, configured to determine a quality inspection result of the connecting piece based on the position information of the reference contour and the position information of the inspection contour.

The image obtaining module 910, the image identification module 920, and the inspection result determining module 930 of the connecting piece quality inspection apparatus 900 may correspond to steps S401 to S403 respectively, as shown in FIG. 4. Therefore, details of various aspects thereof are not repeated herein.

In the connecting piece quality inspection method according to some embodiments of this application, the inspection image of the connecting piece is obtained to determine the position information of the reference contour and the inspection contour of the bulge in the inspection image, and the quality inspection result of the connecting piece is determined based on the position information of the reference contour and the position information of the inspection contour. In this way, quantitative analysis of the formation quality of the bulge of the connecting piece can be performed. Then, the quality inspection result of the connecting piece is determined, and quantitative inspection and analysis can be performed on the bulge displacement, formed during stamping, of the connecting piece. In this way, an accurate quality inspection result of the connecting piece can be obtained. This prevents non-conforming connecting pieces from being mounted on traction batteries, reducing the risk of battery safety accidents.

According to a third aspect of this application, a connecting piece production method is further provided, including: stamping a piece body of a connecting piece to form a bulge, where the bulge includes a mouth portion co-planar with the piece body, a bottom portion protruding from the piece body, and a side wall connecting the mouth portion and the bottom portion; and inspecting the stamped connecting piece by using the inspection method according to the foregoing embodiments to determine a quality inspection result of the connecting piece.

In the connecting piece quality inspection method according to some embodiments of this application, the stamped connecting piece is inspected by using the inspection method according to the foregoing embodiments. In this way, during production of the connecting piece, quantitative inspection and analysis can be performed on the bulge displacement, formed during stamping, of the connecting piece. Therefore, an accurate quality inspection result of the connecting piece can be obtained. This prevents non-conforming connecting pieces from being mounted on traction batteries, reducing the risk of battery safety accidents.

In some embodiments, the stamping a piece body of a connecting piece to form a bulge may further include: preparing at least one reference feature point and/or at least one inspection feature point on a surface of the connecting piece at the piece body side, where the at least one reference feature point is used to indicate a position of a reference contour of the mouth portion of the bulge, and the at least one inspection feature point is used to indicate a position of an inspection contour of the bottom portion of the bulge.

In an example, the reference feature point and the inspection feature point may be prepared during the process of stamping the piece body of the connecting piece to form the bulge. For example, a first pattern of the reference feature point and a second pattern of the inspection feature point are formed during stamping of the bulge.

In the connecting piece quality inspection method according to some embodiments of this application, the reference feature point and/or the inspection feature point is formed by stamping, so that the positions of the reference contour and the inspection contour can be easily determined.

In some embodiments, the at least one inspection feature point is at least one first pattern formed by stamping, and the first pattern is a pattern of circle, oval, cross, teardrop, or polygon; and the at least one reference feature point is at least one second pattern formed by stamping, and the second pattern is a pattern of circle, oval, cross, teardrop, or polygon.

In an example, the polygon may include triangles, quadrilaterals, and other multilateral closed shapes. The first pattern may be a hollow pattern with a hollow center or a solid pattern in a set shape. The first pattern and the second pattern may be the same for ease of processing, or different for ease of image identification.

In the connecting piece quality inspection method according to some embodiments of this application, the first pattern and the second pattern are formed by stamping, simplifying the preparation process and avoiding increase of cost. Specific design of the first pattern and the second pattern is conducive to identification, so that the positions of the reference contour and the inspection contour can be easily determined.

In some embodiments, the connecting piece production method further includes: rejecting a non-conforming connecting piece in response to the quality inspection result being failed.

Based on the quality inspection result of connecting pieces, the produced connecting pieces can be sorted for selecting conforming connecting pieces and rejecting non-conforming connecting pieces, which helps guarantee the quality of subsequent battery manufacturing processes. For example, a sorting mechanism may be used to receive a quality inspection result of the connecting piece and sort based on the quality inspection result.

In the connecting piece quality inspection method according to some embodiments of this application, the non-conforming connecting piece is rejected in response to the quality inspection result being failed. In this way, non-conforming connecting pieces can be handled and separated from conforming connecting pieces, helping improve the efficiency of connecting piece production.

According to a fourth aspect of this application, a connecting piece production device is provided, adopting the connecting piece production method according to the foregoing embodiments.

According to a fifth aspect of this application, an electronic device is further provided, including at least one processor and a memory communicatively connected with the at least one processor. The memory stores instructions capable of being executed by the at least one processor, and the instructions are executed by the at least one processor so that the at least one processor is capable of implementing the methods according to the foregoing embodiments.

An embodiment of a sixth aspect of this application provides an embodiment of the sixth aspect of this application provides a computer readable storage medium storing a computer program. When the computer program is executed by a processor, the quality inspection method according to the foregoing embodiments or the production method according to the foregoing embodiments is implemented.

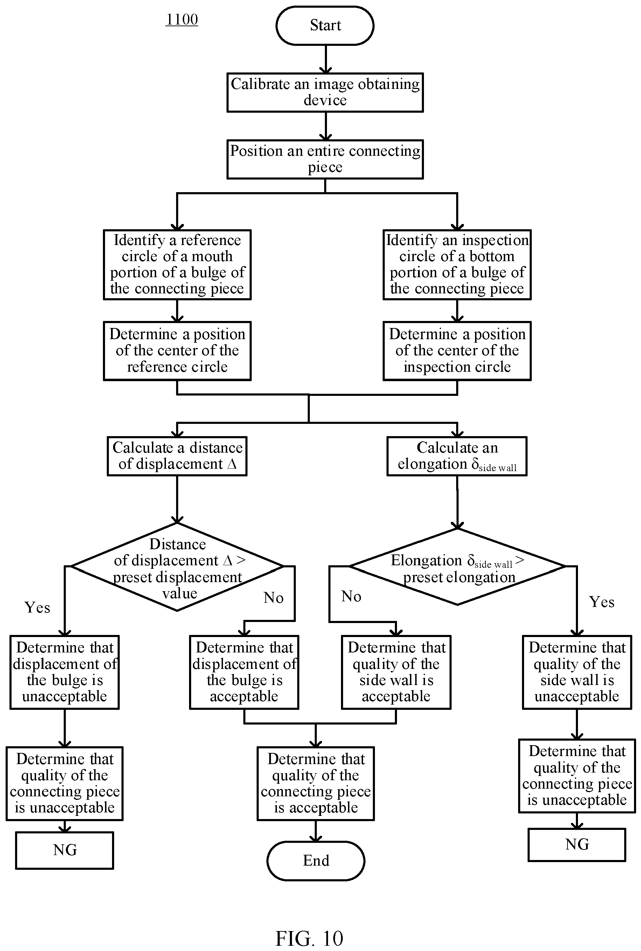

FIG. 10 is a flowchart of a connecting piece quality inspection method 1100 according to some embodiments of this application.

As shown in FIG. 10, the image obtaining device may first be calibrated by using a calibration plate to convert pixels of the image obtaining device into actual distances, so that the bulge of the connecting piece is within an image obtaining range. In some embodiments, the image obtaining device may be a CCD camera.

After the image obtaining device is calibrated, the entire connecting piece can be positioned using a positioning tool of software to ensure that inspection of the bulge of the connecting piece is not affected by the product position.

After the connecting piece is positioned, the image obtaining device can be used to capture the inspection image of the connecting piece, and then the computer program can be used to identify positions of the mouth portion and the bottom portion of the bulge of the connecting piece in the inspection image of the connecting piece. A position of the center of the reference contour can be determined based on the identified position of the mouth portion of the bulge of the connecting piece. A position of the center of the inspection contour can be determined based on the identified position of the bottom portion of the bulge of the connecting piece. When the reference contour is a reference circle, and the inspection contour is an inspection circle, the position of the center A1 of the reference contour is the position of the center of the reference circle, and the position of the center A2 of the inspection contour is the position of the center of the inspection circle.

Referring to FIG. 7, the position of the center A1 of the reference contour may be determined by identifying four reference feature points 2121a, 2121b, 2121c, and 2121d that are equally spaced around the center of the reference contour at the mouth portion of the bulge, and the position of the center A2 of the inspection contour may be determined by identifying four inspection feature points 2122a, 2122b, 2122c, and 2122d that are equally spaced around the center of the inspection contour at the bottom portion of the bulge.

After the position of the center A1 of the reference contour and the position of the center A2 of the inspection contour, the distance of displacement $\Delta$ described in the foregoing embodiments can be calculated, and the elongation $\delta_{\text{side wall}}$ of the side wall can be calculated based on the position of the center A1 of the reference contour, the position of the center A2 of the inspection contour, and dimensional parameters of the bulge in the design state.

After the distance of displacement $\Delta$ and the elongation $\delta_{\text{side wall}}$ are calculated, the distance of displacement $\Delta$ and the elongation $\delta_{\text{side wall}}$ can be compared with the preset displacement value and the preset elongation respectively, so as to determine the quality inspection result of the connecting piece. Specifically, this includes:

determining whether the distance of displacement Δ is greater than the preset displacement value; where if the determining result is yes, it is determined that the displacement of the bulge of the connecting piece is unacceptable; or if the determining result is no, it is determined that the displacement of the bulge of the connecting piece is acceptable; and determining whether the elongation $\delta_{side\,wall}$ is greater than the preset elongation; where if the determining result is yes, it is determined that the quality of the side wall of the connecting piece is unacceptable; or if the determining result is no, it is determined that the quality of the side wall of the connecting piece is acceptable.

Based on the result of whether the displacement of the bulge and the quality of the side wall are acceptable, the quality inspection result of the connecting piece is further determined. This specifically includes:

if both the displacement of the bulge and the quality of the side wall are acceptable, determining that the quality inspection result of the connecting piece is pass; or
if at least either of the displacement of the bulge and the quality of the side wall is unacceptable, determining that the quality inspection result of the connecting piece is failed.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the claims. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1.  A connecting piece quality inspection method (400), wherein the connecting piece comprises a piece body and a bulge protruding from a surface of the piece body, and the method comprises:

obtaining (S401) an inspection image of the connecting piece, wherein the inspection image covers the bulge;
determining(S402), in the inspection image, position information of a reference contour of the bulge and position information of an inspection contour of the bulge, wherein the reference contour is a contour of a mouth portion of the bulge co-planar with the piece body, and the inspection contour is a contour of a bottom portion of the bulge away from the piece body; and
determining (S403) a quality inspection result of the connecting piece based on the position information of the reference contour and the position information of the inspection contour.

2.  The method according to claim 1, wherein the determining (S403) a quality inspection result of the connecting piece based on the position information of the reference contour and the position information of the inspection contour comprises:

determining, based on the position information of the reference contour and the position information of the inspection contour, displacement information of a projection of the inspection contour in an axial direction of the bulge with respect to a projection of the reference contour in the axial direction of the bulge; and
determining the quality inspection result of the connecting piece based on the displacement information.

3.  The method according to claim 2, wherein the displacement information comprises a distance of displacement of a projection of the center of the reference contour in the axial direction of the bulge with respect to a projection of the center of the inspection contour in the axial direction of the bulge; and
the determining the quality inspection result of the connecting piece based on the displacement information comprises:
determining, based on the distance of displacement, whether displacement of the bulge of the connecting piece is acceptable.

4.  The method according to claim 3, wherein the determining, based on the distance of displacement, whether displacement of the bulge of the connecting piece is acceptable comprises:

determining, in response to the distance of displacement being greater than a preset displacement value, that the displacement of the bulge of the connecting piece is unacceptable; wherein the preset displacement value is determined based on a material and/or size of the connecting piece.

**5.** The method according to any one of claims 2 to 4, wherein the determining the quality inspection result of the connecting piece based on the displacement information further comprises:

    calculating, based on the displacement information, an elongation of a side wall connecting the mouth portion and the bottom portion of the bulge; and
    determining, based on the elongation, whether quality of the side wall of the connecting piece is acceptable.

**6.** The method according to claim 5, wherein the calculating, based on the displacement information, an elongation of a side wall connecting the mouth portion and the bottom portion of the bulge comprises:

    calculating a thickness of the side wall based on the displacement information; and
    calculating the elongation of the side wall based on the thickness of the side wall and a thickness of the piece body.

**7.** The method according to claim 6, wherein the displacement information comprises the distance of displacement of the projection of the center of the reference contour in the axial direction of the bulge with respect to the projection of the center of the inspection contour in the axial direction of the bulge; and
the calculating a thickness of the side wall based on the displacement information comprises:

    obtaining a first preset thickness of the side wall, a preset length of a projection of the side wall in the axial direction of the bulge, a second preset thickness of the piece body, and a preset distance between the bottom portion of the bulge and the piece body in the axial direction of the bulge; and
    calculating the thickness of the side wall based on the first preset thickness, the preset length, the second preset thickness, the preset distance, and the distance of displacement.

**8.** The method according to any one of claims 5 to 7, wherein the determining, based on the elongation, whether quality of the side wall of the connecting piece is acceptable comprises:

    determining, in response to the elongation being greater than a preset elongation, that quality of the side wall of the connecting piece is unacceptable; wherein
    the preset elongation is determined based on the material and/or the size of the connecting piece.

**9.** The method according to any one of claims 1 to 8, wherein the mouth portion of the bulge comprises a first reference feature, and the bottom portion of the bulge comprises a second reference feature; and
the determining (S402), in the inspection image, position information of a reference contour of the bulge and position information of an inspection contour of the bulge comprises:

    obtaining, from the inspection image, first reference position information of the first reference feature and second reference position information of the second reference feature;
    determining the position information of the reference contour of the bulge based on the first reference position information of the first reference feature; and
    determining the position information of the inspection contour of the bulge based on the second reference position information of the second reference feature.

**10.** The method according to claim 9, wherein the first reference feature comprises at least one reference feature point; and
the second reference feature comprises at least one inspection feature point, wherein a position of the at least one inspection feature point is in one-to-one correspondence with a position of the at least one reference feature point.

**11.** The method according to claim 10, wherein the at least one reference feature point comprises a plurality of first patterns arranged along a circumference of the reference contour, and the plurality of first patterns are used to indicate the reference contour of the bulge; and the at least one inspection feature point comprises a plurality of second patterns arranged along a circumference of the inspection contour, and the plurality of second patterns are used to indicate the inspection contour of the bulge;
and/or
wherein the at least one reference feature point and/or the at least one inspection feature point is provided on a surface of the bulge close to the piece body; and an obtaining direction of the inspection image is parallel to the axial direction of the bulge.

**12.** A connecting piece quality inspection apparatus (900), wherein the connecting piece (21) comprises a piece body (211) and a bulge (212) protruding from a surface of the piece body (211), and the apparatus comprises:

    an image obtaining module (910), configured to obtain an inspection image of the connecting piece (21), wherein the inspection image covers the bulge (212);

an image identification module (920), configured to determine, in the inspection image, position information of a reference contour of the bulge (212) and position information of an inspection contour of the bulge (212), wherein the reference contour is a contour of a mouth portion (2121) of the bulge (212) co-planar with the piece body (211) of the connecting piece (21), and the inspection contour is a contour of a bottom portion (2122) of the bulge (212) away from the piece body (211) of the connecting piece (21); and

an inspection result determining module (930), configured to determine a quality inspection result of the connecting piece (21) based on the position information of the reference contour and the position information of the inspection contour.

13. A connecting piece production method, comprising:

stamping a piece body of a connecting piece to form a bulge, wherein the bulge comprises a mouth portion co-planar with the piece body, a bottom portion protruding from the piece body, and a side wall connecting the mouth portion and the bottom portion; and

inspecting the stamped connecting piece by using the inspection method according to any one of claims 1 to 11 to determine a quality inspection result of the connecting piece;

wherein, preferably, the stamping a piece body of a connecting piece to form a bulge further comprises:

preparing at least one reference feature point and/or at least one inspection feature point on a surface of the connecting piece at the piece body side, wherein the at least one reference feature point is used to indicate a position of a reference contour of the mouth portion of the bulge, and the at least one inspection feature point is used to indicate a position of an inspection contour of the bottom portion of the bulge, especially wherein the at least one inspection feature point is at least one first pattern formed by stamping, and the first pattern is a pattern of circle, oval, cross, teardrop, or polygon; and the at least one reference feature point is at least one second pattern formed by stamping, and the second pattern is a pattern of circle, oval, cross, teardrop, or polygon.

14. The connecting piece production method according to claim 13, further comprising:
rejecting a non-conforming connecting piece in response to the quality inspection result being failed.

15. An electronic device, comprising

at least one processor; and
a memory communicatively connected with the at least one processor; wherein
the memory stores instructions capable of being executed by the at least one processor, and the instructions are executed by the at least one processor so that the at least one processor is capable of implementing the quality inspection method according to any one of claims 1 to 11 or the connecting piece production method according to any one of claims 13 to 14.

**Patentansprüche**

1. Verbindungsstückqualitätsprüfungsverfahren (400), wobei das Verbindungsstück einen Stückkörper und eine Ausbuchtung umfasst, die von einer Oberfläche des Stückkörpers hervorsteht, und wobei das Verfahren Folgendes umfasst:

Erhalten (S401) eines Prüfbilds des Verbindungsstücks, wobei das Prüfbild die Ausbuchtung abdeckt;
Bestimmen (S402), in dem Prüfbild, von Positionsinformationen einer Referenzkontur der Ausbuchtung und Positionsinformationen einer Prüfkontur der Ausbuchtung, wobei die Referenzkontur eine Kontur eines Mündungsabschnitts der Ausbuchtung komplanar mit dem Stückkörper ist und die Prüfkontur eine Kontur eines Bodenabschnitts der Ausbuchtung entfernt von dem Stückkörper ist; und
Bestimmen (S403) eines Qualitätsprüfungsergebnisses des Verbindungsstücks basierend auf den Positionsinformationen der Referenzkontur und den Positionsinformationen der Prüfkontur.

2. Verfahren nach Anspruch 1, wobei das Bestimmen (S403) eines Qualitätsprüfungsergebnisses des Verbindungsstücks basierend auf den Positionsinformationen der Referenzkontur und den Positionsinformationen der Prüfkontur Folgendes umfasst:

Bestimmen, basierend auf den Positionsinformationen der Referenzkontur und den Positionsinformationen der Prüfkontur, von Verschiebungsinformationen einer Projektion der Prüfkontur in einer axialen Richtung der Ausbuchtung in Bezug auf eine Projektion der Referenzkontur in der axialen Richtung der Ausbuchtung; und
Bestimmen des Qualitätsprüfungsergebnisses des Verbindungsstücks basierend auf den Verschiebungsinformationen.

3. Verfahren nach Anspruch 2, wobei die Verschiebungsinformationen eine Verschiebungsdistanz einer Projektion des Mittelpunkts der Referenzkontur in der axialen Richtung der Ausbuchtung in Bezug auf eine Projektion des Mittelpunkts der Prüfkontur in der axialen Richtung der Ausbuchtung umfassen; und

wobei das Bestimmen des Qualitätsprüfungsergebnisses des Verbindungsstücks basierend auf den Verschiebungsinformationen Folgendes umfasst: Bestimmen, basierend auf der Verschiebungsdistanz, ob eine Verschiebung der Ausbuchtung des Verbindungsstücks akzeptabel ist.

4. Verfahren nach Anspruch 3, wobei das Bestimmen, basierend auf der Verschiebungsdistanz, ob eine Verschiebung der Ausbuchtung des Verbindungsstücks akzeptabel ist, Folgendes umfasst:

Bestimmen, als Reaktion darauf, dass die Verschiebungsdistanz größer als ein voreingestellter Verschiebungswert ist, dass die Verschiebung der Ausbuchtung des Verbindungsstücks nicht akzeptabel ist; wobei der voreingestellte Verschiebungswert basierend auf einem Material und/oder einer Größe des Verbindungsstücks bestimmt wird.

5. Verfahren nach einem der Ansprüche 2 bis 4, wobei das Bestimmen des Qualitätsprüfungsergebnisses des Verbindungsstücks basierend auf den Verschiebungsinformationen ferner Folgendes umfasst:

Berechnen, basierend auf den Verschiebungsinformationen, einer Ausdehnung einer Seitenwand, die den Mündungsabschnitt und den Bodenabschnitt der Ausbuchtung verbindet; und Bestimmen, basierend auf der Ausdehnung, ob eine Qualität der Seitenwand des Verbindungsstücks akzeptabel ist.

6. Verfahren nach Anspruch 5, wobei das Berechnen, basierend auf den Verschiebungsinformationen, einer Ausdehnung einer Seitenwand, die den Mündungsabschnitt und den Bodenabschnitt der Ausbuchtung verbindet, Folgendes umfasst:

Berechnen einer Dicke der Seitenwand basierend auf den Verschiebungsinformationen; und Berechnen der Ausdehnung der Seitenwand basierend auf der Dicke der Seitenwand und einer Dicke des Stückkörpers.

7. Verfahren nach Anspruch 6, wobei die Verschiebungsinformationen die Verschiebungsdistanz der Projektion des Mittelpunkts der Referenzkontur in der axialen Richtung der Ausbuchtung in Bezug auf die Projektion des Mittelpunkts der Prüfkontur in der axialen Richtung der Ausbuchtung umfassen; und

wobei das Berechnen einer Dicke der Seitenwand basierend auf den Verschiebungsinformationen Folgendes umfasst:

Erhalten einer ersten voreingestellten Dicke der Seitenwand, einer voreingestellten Länge einer Projektion der Seitenwand in der axialen Richtung der Ausbuchtung, einer zweiten voreingestellten Dicke des Stückkörpers und einer voreingestellten Distanz zwischen dem Bodenabschnitt der Ausbuchtung und dem Stückkörper in der axialen Richtung der Ausbuchtung; und Berechnen der Dicke der Seitenwand basierend auf der ersten voreingestellten Dicke, der voreingestellten Länge, der zweiten voreingestellten Dicke, der voreingestellten Distanz und der Verschiebungsdistanz.

8. Verfahren nach einem der Ansprüche 5 bis 7, wobei das Bestimmen, basierend auf der Ausdehnung, ob eine Qualität der Seitenwand des Verbindungsstücks akzeptabel ist, Folgendes umfasst: Bestimmen, als Reaktion darauf, dass die Ausdehnung größer als eine voreingestellte Ausdehnung ist, dass die Qualität der Seitenwand des Verbindungsstücks nicht akzeptabel ist; wobei die voreingestellte Ausdehnung basierend auf dem Material und/oder der Größe des Verbindungsstücks bestimmt wird.

9. Verfahren nach einem der Ansprüche 1 bis 8, wobei der Mündungsabschnitt der Ausbuchtung ein erstes Referenzmerkmal umfasst und der Bodenabschnitt der Ausbuchtung ein zweites Referenzmerkmal umfasst; und

wobei das Bestimmen (S402), in dem Prüfbild, von Positionsinformationen einer Referenzkontur der Ausbuchtung und Positionsinformationen einer Prüfkontur der Ausbuchtung Folgendes umfasst:

Erhalten, aus dem Prüfbild, von ersten Referenzpositionsinformationen des ersten Referenzmerkmals und zweiten Referenzpositionsinformationen des zweiten Referenzmerkmals; Bestimmen der Positionsinformationen der Referenzkontur der Ausbuchtung basierend auf den ersten Referenzpositionsinformationen des ersten Referenzmerkmals; und Bestimmen der Positionsinformationen der Prüfkontur der Ausbuchtung basierend auf den zweiten Referenzpositionsinformationen des zweiten Referenzmerkmals.

10. Verfahren nach Anspruch 9, wobei das erste Referenzmerkmal mindestens einen Referenzmerkmalspunkt umfasst; und

wobei das zweite Referenzmerkmal mindestens einen Prüfmerkmalspunkt umfasst, wobei eine Position des mindestens einen Prüfmerkmalspunkts in einer Eins-zu-Eins-Übereinstimmung mit einer Position des mindestens einen Referenzmerkmalspunkts steht.

11. Verfahren nach Anspruch 10, wobei der mindestens eine Referenzmerkmalspunkt mehrere erste Muster umfasst, die entlang eines Umfangs der Referenzkontur angeordnet sind, und die mehreren ersten Muster verwendet werden, um die Referenzkontur der Ausbuchtung anzugeben; und wobei der mindestens eine Prüfmerkmalspunkt mehrere zweite Muster umfasst, die entlang eines Umfangs der Prüfkontur angeordnet sind, und die mehreren zweiten Muster verwendet werden, um die Prüfkontur der Ausbuchtung anzugeben; und/oder
wobei der mindestens eine Referenzmerkmalspunkt und/oder der mindestens eine Prüfmerkmalspunkt auf einer Oberfläche der Ausbuchtung nahe dem Stückkörper bereitgestellt ist; und wobei eine Erhaltungsrichtung des Prüfbildes parallel zu der axialen Richtung der Ausbuchtung ist.

12. Verbindungsstückqualitätsprüfungsvorrichtung (900), wobei das Verbindungsstück (21) einen Stückkörper (211) und eine Ausbuchtung (212) umfasst, die von einer Oberfläche des Stückkörpers (211) hervorsteht, und wobei die Vorrichtung Folgendes umfasst:

ein Bilderhaltungsmodul (910), das dazu ausgelegt ist, ein Prüfbild des Verbindungsstücks (21) zu erhalten, wobei das Prüfbild die Ausbuchtung (212) abdeckt;
ein Bildidentifikationsmodul (920), das dazu ausgelegt ist, in dem Prüfbild Positionsinformationen einer Referenzkontur der Ausbuchtung (212) und Positionsinformationen einer Prüfkontur der Ausbuchtung (212) zu bestimmen, wobei die Referenzkontur eine Kontur eines Mündungsabschnitts (2121) der Ausbuchtung (212) komplanar mit dem Stückkörper (211) des Verbindungsstücks (21) ist und die Prüfkontur eine Kontur eines Bodenabschnitts (2122) der Ausbuchtung (212) entfernt von dem Stückkörper (211) des Verbindungsstücks (21) ist; und
ein Prüfungsergebnisbestimmungsmodul (930), das dazu ausgelegt ist, ein Qualitätsprüfungsergebnis des Verbindungsstücks (21) basierend auf den Positionsinformationen der Referenzkontur und den Positionsinformationen der Prüfkontur zu bestimmen.

13. Verbindungsstückherstellungsverfahren, das Folgendes umfasst:

Stanzen eines Stückkörpers eines Verbindungsstücks, um eine Ausbuchtung zu bilden, wobei die Ausbuchtung einen Mündungsabschnitt komplanar mit dem Stückkörper, einen Bodenabschnitt, der von dem Stückkörper hervorsteht, und eine Seitenwand, die den Mündungsabschnitt und den Bodenabschnitt verbindet, umfasst; und
Prüfen des gestanzten Verbindungsstücks unter Verwendung des Prüfungsverfahrens nach einem der Ansprüche 1 bis 11, um ein Qualitätsprüfungsergebnis des Verbindungsstücks zu bestimmen;
wobei vorzugsweise das Stanzen eines Stückkörpers eines Verbindungsstücks zum Bilden einer Ausbuchtung ferner Folgendes umfasst:
Vorbereiten mindestens eines Referenzmerkmalspunkts und/oder mindestens eines Prüfmerkmalspunkts auf einer Oberfläche des Verbindungsstücks auf der Stückkörperseite, wobei der mindestens eine Referenzmerkmalspunkt verwendet wird, um eine Position einer Referenzkontur des Mündungsabschnitts der Ausbuchtung anzugeben, und der mindestens eine Prüfmerkmalspunkt verwendet wird, um eine Position einer Prüfkontur des Bodenabschnitts der Ausbuchtung anzugeben, insbesondere wobei der mindestens eine Prüfmerkmalspunkt mindestens ein durch Stanzen gebildetes erstes Muster ist und das erste Muster ein Kreis-, Oval-, Kreuz-, Tropfen- oder Polygonmuster ist; und wobei der mindestens eine Referenzmerkmalspunkt mindestens ein durch Stanzen gebildetes zweites Muster ist und das zweite Muster ein Kreis-, Oval-, Kreuz-, Tropfen- oder Polygonmuster ist.

14. Verbindungsstückherstellungsverfahren nach Anspruch 13, das ferner Folgendes umfasst:
Verwerfen eines nicht konformen Verbindungsstücks als Reaktion darauf, dass das Qualitätsprüfungsergebnis nicht bestanden ist.

15. Elektronische Vorrichtung, die Folgendes umfasst

mindestens einen Prozessor; und
einen Speicher, der kommunikativ mit dem mindestens einen Prozessor verbunden ist; wobei der Speicher Anweisungen speichert, die durch den mindestens einen Prozessor ausgeführt werden können, und die Anweisungen durch den mindestens einen Prozessor ausgeführt werden, so dass der mindestens eine Prozessor in der Lage ist, das Qualitätsprüfungsverfahren nach einem der Ansprüche 1 bis 11 oder das Verbindungsstückherstellungsverfahren nach einem der Ansprüche 13 bis 14 zu implementieren.

## Revendications

1. Procédé d'inspection de qualité de pièce d'adaptateur (400), la pièce d'adaptateur comprenant un corps de pièce et un renflement faisant saillie d'une surface du corps de pièce, et le procédé comprenant les étapes consistant à :

   obtenir (S401) une image d'inspection de la pièce d'adaptateur, l'image d'inspection couvrant le renflement ;
   déterminer (S402), dans l'image d'inspection, des informations de position d'un contour de référence du renflement et des informations de position d'un contour d'inspection du renflement, le contour de référence étant un contour d'une partie d'embouchure du renflement coplanaire avec le corps de pièce, et le contour d'inspection étant un contour d'une partie inférieure du renflement à l'opposé du corps de pièce ; et
   déterminer (S403) un résultat d'inspection de qualité de la pièce d'adaptateur sur la base des informations de position du contour de référence et des informations de position du contour d'inspection.

2. Procédé selon la revendication 1, la détermination (S403) d'un résultat d'inspection de qualité de la pièce d'adaptateur sur la base des informations de position du contour de référence et des informations de position du contour d'inspection comprenant les étapes consistant à :

   déterminer, sur la base des informations de position du contour de référence et des informations de position du contour d'inspection, des informations de déplacement d'une saillie du contour d'inspection dans une direction axiale du renflement par rapport à une saillie du contour de référence dans la direction axiale du renflement ; et
   déterminer le résultat d'inspection de qualité de la pièce d'adaptateur sur la base des informations de déplacement.

3. Procédé selon la revendication 2, les informations de déplacement comprenant une distance de déplacement d'une saillie du centre du contour de référence dans la direction axiale du renflement par rapport à une saillie du centre du contour d'inspection dans la direction axiale du renflement ; et
   la détermination du résultat d'inspection de qualité de la pièce d'adaptateur sur la base des informations de déplacement comprenant l'étape consistant à :
   déterminer, sur la base de la distance de déplacement, si le déplacement du renflement de la pièce d'adaptateur est acceptable.

4. Procédé selon la revendication 3, la détermination, sur la base de la distance de déplacement, du fait que le déplacement du renflement de la pièce d'adaptateur est acceptable comprenant l'étape consistant à :

   déterminer, en réponse au fait que la distance de déplacement est supérieure à une valeur de déplacement prédéfinie, que le déplacement du renflement de la pièce d'adaptateur est inacceptable ;
   la valeur de déplacement prédéfinie étant déterminée en fonction du matériau et/ou de la dimension de la pièce d'adaptateur.

5. Procédé selon l'une quelconque des revendications 2 à 4, la détermination du résultat d'inspection de qualité de la pièce d'adaptateur sur la base des informations de déplacement comprenant en outre les étapes consistant à :

   calculer, sur la base des informations de déplacement, un allongement d'une paroi latérale reliant la partie d'embouchure et la partie inférieure du renflement ; et
   déterminer, sur la base de l'allongement, si la qualité de la paroi latérale de la pièce d'adaptateur est acceptable.

6. Procédé selon la revendication 5, le calcul, sur la base des informations de déplacement, d'un allongement d'une paroi latérale reliant la partie d'embouchure et la partie inférieure du renflement comprenant les étapes consistant à :

   calculer une épaisseur de la paroi latérale sur la base des informations de déplacement ; et
   calculer l'allongement de la paroi latérale en fonction de l'épaisseur de la paroi latérale et d'une épaisseur du corps de pièce.

7. Procédé selon la revendication 6, les informations de déplacement comprenant la distance de déplacement de la saillie du centre du contour de référence dans la direction axiale du renflement par rapport à la saillie du centre du contour d'inspection dans la direction axiale du renflement ; et
   le calcul d'une épaisseur de la paroi latérale sur la base des informations de déplacement comprenant les étapes consistant à :

   obtenir une première épaisseur prédéfinie de la paroi latérale, une longueur prédéfinie d'une saillie de la paroi latérale dans la direction axiale du renflement, une seconde épaisseur prédéfinie du corps de pièce et une distance prédéfinie entre la partie inférieure du renflement et le corps de pièce dans la direction axiale du renflement ; et

calculer l'épaisseur de la paroi latérale en fonction de la première épaisseur prédéfinie, de la longueur prédéfinie, de la seconde épaisseur prédéfinie, de la distance prédéfinie et de la distance de déplacement.

**8.** Procédé selon l'une quelconque des revendications 5 à 7, la détermination, sur la base de l'allongement, du fait que la qualité de la paroi latérale de la pièce d'adaptateur est acceptable comprenant l'étape consistant à :

déterminer, en réponse au fait que l'allongement est supérieur à un allongement prédéfini, que la qualité de la paroi latérale de la pièce d'adaptateur est inacceptable ;
l'allongement prédéfini étant déterminé en fonction du matériau et/ou de la dimension de la pièce d'adaptateur.

**9.** Procédé selon l'une quelconque des revendications 1 à 8, la partie d'embouchure du renflement comprenant une première caractéristique de référence, et la partie inférieure du renflement comprenant une seconde caractéristique de référence ; et
la détermination (S402), dans l'image d'inspection, des informations de position d'un contour de référence du renflement et des informations de position d'un contour d'inspection du renflement comprenant les étapes consistant à :

obtenir, à partir de l'image d'inspection, des premières informations de position de référence de la première caractéristique de référence et des secondes informations de position de référence de la seconde caractéristique de référence ;
déterminer les informations de position du contour de référence du renflement sur la base des premières informations de position de référence de la première caractéristique de référence ; et
déterminer les informations de position du contour d'inspection du renflement sur la base des secondes informations de position de référence de la seconde caractéristique de référence.

**10.** Procédé selon la revendication 9, la première caractéristique de référence comprenant au moins un point de caractéristique de référence ; et
la seconde caractéristique de référence comprenant au moins un point de caractéristique d'inspection, une position de l'au moins un point de caractéristique d'inspection correspondant à une position de l'au moins un point de caractéristique de référence.

**11.** Procédé selon la revendication 10, l'au moins un point de caractéristique de référence comprenant une pluralité de premiers motifs disposés le long d'une circonférence du contour de référence, et la pluralité de premiers motifs étant utilisée pour indiquer le contour de référence du renflement ; et l'au moins un point de caractéristique d'inspection comprenant une pluralité de seconds motifs disposés le long d'une circonférence du contour d'inspection, et la pluralité de seconds motifs étant utilisée pour indiquer le contour d'inspection du renflement ;
et/ou
l'au moins un point de caractéristique de référence et/ou l'au moins un point de caractéristique d'inspection étant situé(s) sur une surface du renflement proche du corps de pièce ; et une direction d'obtention de l'image d'inspection étant parallèle à la direction axiale du renflement.

**12.** Appareil d'inspection de qualité de pièce d'adaptateur (900), la pièce d'adaptateur (21) comprenant un corps de pièce (211) et un renflement (212) faisant saillie à partir d'une surface du corps de pièce (211), et l'appareil comprenant :

un module d'obtention d'image (910), conçu pour obtenir une image d'inspection de la pièce d'adaptateur (21), l'image d'inspection couvrant le renflement (212) ;
un module d'identification d'image (920), conçu pour déterminer, dans l'image d'inspection, des informations de position d'un contour de référence du renflement (212) et des informations de position d'un contour d'inspection du renflement (212), le contour de référence étant un contour d'une partie d'embouchure (2121) du renflement (212) coplanaire avec le corps de pièce (211) de la pièce d'adaptateur (21), et le contour d'inspection étant un contour d'une partie inférieure (2122) du renflement (212) à l'opposé du corps de pièce (211) de la pièce d'adaptateur (21) ; et
un module de détermination de résultat d'inspection (930), conçu pour déterminer un résultat d'inspection de qualité de la pièce d'adaptateur (21) sur la base des informations de position du contour de référence et des informations de position du contour d'inspection.

**13.** Procédé de production de pièce d'adaptateur, comprenant les étapes consistant à :

estamper un corps de pièce d'une pièce d'adaptateur pour former un renflement, le renflement comprenant une partie d'embouchure coplanaire avec le corps de pièce, une partie inférieure faisant saillie du corps de pièce, et une paroi latérale reliant la partie d'embouchure et la partie inférieure ; et

commander la pièce d'adaptateur estampée en utilisant le procédé d'inspection selon l'une quelconque des revendications 1 à 11 pour déterminer un résultat d'inspection de qualité de la pièce d'adaptateur ;

de préférence, l'estampage d'un corps de pièce d'une pièce d'adaptateur pour former un renflement comprenant en outre l'étape consistant à : préparer au moins un point de caractéristique de référence et/ou au moins un point de caractéristique d'inspection sur une surface de la pièce d'adaptateur au niveau du côté de corps de pièce, l'au moins un point de caractéristique de référence étant utilisé pour indiquer une position d'un contour de référence de la partie d'embouchure du renflement, et l'au moins un point de caractéristique d'inspection étant utilisé pour indiquer une position d'un contour d'inspection de la partie inférieure du renflement, en particulier l'au moins un point de caractéristique d'inspection étant au moins un premier motif formé par estampage, et le premier motif étant un motif de cercle, d'ovale, de croix, de goutte d'eau ou de polygone ; et l'au moins un point de caractéristique de référence étant au moins un second motif formé par estampage, et le second motif étant un motif d'un cercle, d'un ovale, d'une croix, d'une goutte d'eau ou d'un polygone.

14. Procédé de production de pièce d'adaptateur selon la revendication 13, comprenant en outre l'étape consistant à :

refuser une pièce d'adaptateur non conforme en réponse à l'échec du résultat d'inspection de qualité.

15. Dispositif électronique, comprenant :

au moins un processeur ; et
une mémoire connectée de manière communicative à l'au moins un processeur ;
la mémoire stockant des instructions pouvant être exécutées par l'au moins un processeur, et les instructions étant exécutées par l'au moins un processeur de sorte que l'au moins un processeur puisse mettre en œuvre le procédé d'inspection de qualité selon l'une quelconque des revendications 1 à 11 ou le procédé de production de pièce d'adaptateur selon l'une quelconque des revendications 13 à 14.

1000

FIG. 1

100

FIG. 2

21

211

212

2123

2121

2122

FIG. 3

400

Obtain an inspection image of a connecting piece, where the inspection image covers a bulge — S401

Determine, in the inspection image, position information of a reference contour of the bulge and position information of an inspection contour of the bulge — S402

Determine a quality inspection result of the connecting piece based on the position information of the reference contour and the position information of the inspection contour — S403

FIG. 4

21

$T_1$  212  A2  2122

2123

$H_1$

211

F1

$T_0$

A1  2121

F2

FIG. 5

FIG. 6

FIG. 7

FIG. 8

FIG. 9

1100

```
                              ┌──────────┐
                              │  Start   │
                              └──────────┘
                                   │
                                   ▼
                      ┌─────────────────────────┐
                      │ Calibrate an image obtaining │
                      │          device          │
                      └─────────────────────────┘
                                   │
                                   ▼
                      ┌─────────────────────────┐
                      │ Position an entire connecting │
                      │          piece           │
                      └─────────────────────────┘
```

| Identify a reference circle of a mouth portion of a bulge of the connecting piece | Identify an inspection circle of a bottom portion of a bulge of the connecting piece |
|---|---|
| Determine a position of the center of the reference circle | Determine a position of the center of the inspection circle |
| Calculate a distance of displacement $\Delta$ | Calculate an elongation $\delta_{side\,wall}$ |

Distance of displacement $\Delta >$ preset displacement value

Elongation $\delta_{side\,wall} >$ preset elongation

Yes        No        No        Yes

| Determine that displacement of the bulge is unacceptable | Determine that displacement of the bulge is acceptable | Determine that quality of the side wall is acceptable | Determine that quality of the side wall is unacceptable |
|---|---|---|---|

| Determine that quality of the connecting piece is unacceptable | Determine that quality of the connecting piece is acceptable | | Determine that quality of the connecting piece is unacceptable |
|---|---|---|---|

| NG | End | | NG |

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310008419

- DE 102014214201 A1

**Non-patent literature cited in the description**

- **A. B. ABDULLAH et al.** Roundness error evaluation of cold embossed hole based on profile measurement technique. *Int. J. Adv. Manuf. Technol*, 2015, vol. 80, 293